# EUROPEAN PATENT APPLICATION

(11) **EP 3 644 615 A1**
(43) Date of publication of application: **29.04.2020**
(21) Application number: 18202809.2
(22) Date of filing: 26.10.2018
(51) Int. Cl.: H04N 21/418, H04N 21/83

(54) **AN INTERFACE DEVICE AND METHOD FOR A MAIN RECEIVER**

(71) Applicant: Nagravision SA, 1033 Cheseaux-sur-Lausanne (CH)
(72) Inventor: OLLAGNON, Christophe, 1033 Cheseaux-sur-Lausanne (CH); FISCHER, Nicolas, 1033 Cheseaux-sur-Lausanne (CH); PERRINE, Jerome, 1033 Cheseaux-sur-Lausanne (CH)
(74) Representative: Ipside

(57) **Abstract**

An interface device that is provided between the output of a main receiver and a display device is described. The interface device is configured to decrypt signals output from the main receiver to allow their viewing on the display device

## Description

### Field

The present application relates to main receivers such as set-top boxes, STBs, of the kind that are used as an interface between a television or other display device and a content provider to enable a delivery of otherwise encrypted content to authorised viewers of that content.

### Background Of The Invention

A main receiver is an information appliance device that receives a source signal and processes that source signal into content in a form that can be displayed on a television screen or other display device. They are used in cable television, satellite television, and over-the-air television systems, as well as other uses. An example of such a main receiver is a set-top box (STB)

A primary function of a main receiver is to enable a delivery of otherwise encrypted content to authorised viewers of that content. It is known to provide premium television content - known as Pay TV. The providers of that Pay TV transport encrypt video content and then deliver that encrypted content to the main receivers which are collocated with the television or other display device on which the content is viewed. The main receivers are configured to process the received video content to then provide a decrypted video stream as an output to the display device.

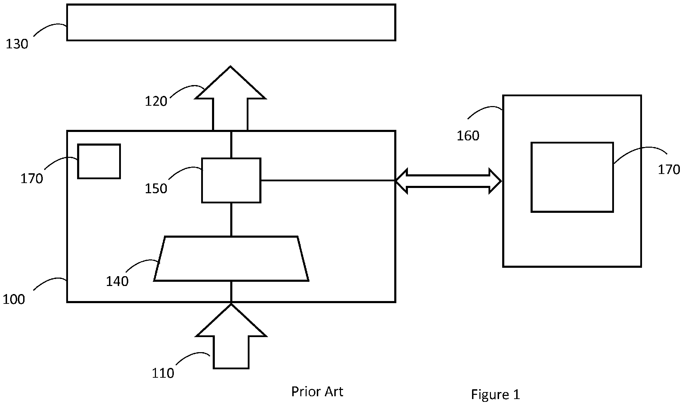

Figure 1 shows in schematic form known components of a main receiver 100. It receives encrypted and scrambled content 110 from an external source via a cable connection. That content is processed and then provided as a descrambled decrypted video stream 120 to a display device 130. The main receiver may be controlled directly by a user using a remote control or other interface- typically the main receiver will include at least one remote control interface 170 - such as an IrDA module.

The internal processing of the received content 120 requires at least an initial processing of that content via a processing element 140. This processing will typically include functionality such as:
1. A tuner/demodulator function which is configured to receive a signal on a specified frequency and demodulates that signal to a format compatible for viewing on the display. Such functionality may support analog and/or digital signals. Typically, this performs a first level of error correction and removes first level of packetization in the stream. It is known to provide tuners that are specific to cable, satellite or terrestrial sourced content. It is also known to provide tuners that are capable of receiving Internet Protocol, IP, unicast or multicast transmissions.
2. A demultiplexer function which filters received data packets that contain audio, video or data.
3. A video decoder function that decodes the received content into a decompressed display signal provided in a suitable format, such as for example HDMI.

That processed scrambled content is then passed to a conditional access agent 150, CAG, of the type that is configured to descramble the decompressed scrambled signal by use of one or more decryption algorithms.

Examples of known CAGs are those provided by the present applicant. In this example the processing uses an embedded Conditional Access Agent 150 and one or more secure elements 170 holding encryption keys 170 that are loaded into a removable security device 160, i.e. a smart card or a USB key. It is also known to fully embed the security features into the housing of the main receiver itself. The CAG uses hardware and software subsystems to receive and decrypt the signal - these components include a decryption chip, a secure processor and device drivers. The decryption chip is responsible for the processing of the conditional access algorithm and the secure processor contains the necessary keys for decryption.

Given the significance of the value of that video content - typically premium channels, live events, etc, there are known security issues associated with same. For example, it is known that hackers try and sometimes succeed in forging the main receiver or otherwise access the decryption keys that are used by the processor of the main receiver to allow for unauthorised decryption of the content. This can be used for personalised viewing and/or for streaming that content to multiple other sites.

As the main receiver is a piece of hardware that is located beside the display device that is used to view the content, the capacity to change the hardware of the main receiver is a complex exercise. Firmware upgrades can be provided over the air, OTA, but there are challenges in replacing individual main receivers to address identified security flaws.

### Summary

Accordingly, a first embodiment of the application provides an interface device configured to interface with a main receiver, the interface device comprising a USB input configured to receive a scrambled audio-video signal from an output of the main receiver, the interface device comprising a video processing module configured to descramble and decode the received signal, the video processing module being configured to receive a descrambling key from a secure element and to descramble the received signal using the received key, the interface device being further configured to output that descrambled and decoded signal to a display device.

The device includes an uncompressed video output such as HDMI.

The device is typically configured to receive power directly from the main receiver over the USB input.

The interface device desirably comprises a system on a chip integrated circuit. The device is further configured to interface with a secure element to retrieve at least one descrambling key. The secure element may be integrated in the device or may alternatively be provided on a second separate device, the interface device configured to communicate with the second separate device to utilise the secure element.

By providing an interface device in accordance with the present teaching as an interface element between a main receiver and a display device, the present teaching enables the use of the main receiver to demodulate and tune a received signal but the descrambling and decoding of that signal is offloaded to the separate interface device. The control of the received signal and its use is therefore not constrained by the functionality of the main receiver itself.

These and other features will be better understood with reference to the following drawings and examples. It will be appreciated however that the present teaching is not to be constrained by the exemplary arrangements that follow, a device per the present teaching is defined only by claim 1 that follows. Advantageous embodiments are provided in the dependent claims.

### Brief Description Of The Drawings

The present application will now be described with reference to the accompanying drawings in which:
Figure 1 is an example of functionality of a known set-top-box.
Figure 2 is an example of an interface device that interfaces with a known main receiver in accordance with the present teaching.
Figure 3 is a schematic showing further detail on the interface device of Figure 2 in accordance with the present teaching.
Figure 4 is a schematic showing a modification to the interface device of Figure 3 in accordance with the present teaching
Figure 5 is a schematic showing another modification to the interface device of Figure 2 in accordance with the present teaching

### Detailed Description Of The Drawings

It will be appreciated that for simplicity and clarity, where considered appropriate, reference numerals may be repeated among the Figures to indicate corresponding or analogous elements.

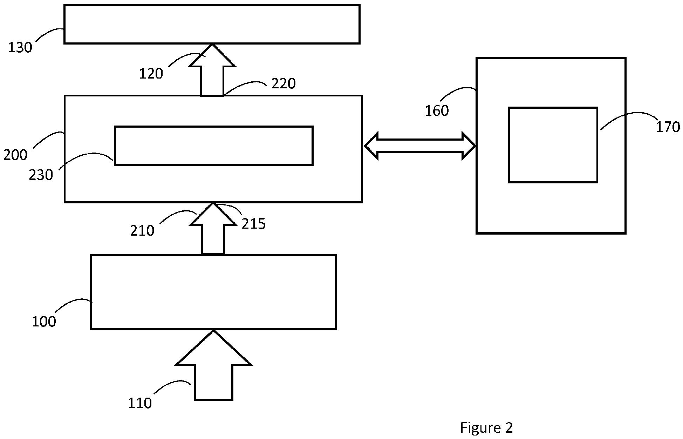

A known main receiver configuration has been described with reference to Figure 1. Figure 2 shows an example of an interface device 200 in accordance with the present teaching. The device is configured to interface with a main receiver, such as the type 100 that was described with reference to Figure 1.

The interface device 200 is configured to receive a data stream, and more particularly an audio- video stream 210 from an output of the main receiver 100. The video stream 210 has been semi-processed by the main receiver in that tuning and demultiplexing processes have been effected on the signal 110 that was originally received into the main receiver 100 from the external source. However, the signal stream 210 is still scrambled and thus is presented in an encrypted form into the interface device 200.

The interface device 200 receives that signal 210 and processes it on the interface device 200 to provide as an output from the interface device 200 a descrambled and decoded video stream that can be viewed on the display device 130.

The input 215 to the interface device 200 is desirably a USB interface such that the interface device 200 communicates over USB protocols with the main receiver 100. The interface device 200 desirably outputs the signal 120 over a suitable interface to the display 130, in particular into an HDMI interface to the display 130. In this context however it will be appreciated that HDMI is an exemplary format and that it is not intended to limit the present teaching to such a format as other suitable formats for displaying could be supported by the device such as VGA, DVI, Display Port or optic fibre. It will be appreciated therefore the interface device 200, in this configuration, provides an interface-such as a USB/HDMI interface- between the main receiver 100 and the display 130. However, and critically, in addition to a simple interface, the interface device 200 comprises security functionality and processing capacity sufficient to process the necessary security protocols onto a video stream that originates from a signal 110 that is transferred from the remote content provider- be that satellite/ cable or terrestrial.

As detailed above the interface device 200 comprises a USB input 215 configured to receive a scrambled audio-video signal 210 from an output of the main receiver 100. It will be appreciated that a scrambled audio video signal is an encrypted signal. The interface device 200 further comprises a video processing module 230 that is configured to descramble and decode the received signal. The video processing module is configured to receive a descrambling key from a secure element and to descramble the received signal using the received key. On processing that signal, the interface device 200 is configured to output that descrambled and decoded signal 120 to the display device 130, desirably over an HDMI output. By decoding, we understand the step of decompressing the video stream (compressed according to MPEG format for example) to obtain an uncompressed video stream.

Power for the processing functionality of the processor 230 of the interface device is desirably provided over the USB interface such that the interface device is configured to receive power directly from the main receiver over the USB input. In this way the interface device does not require a dedicated power supply on-board or a separate power supply to the main receiver.

The interface device desirably comprises a system on a chip integrated circuit. The interface device is further configured to interface with a secure element which may be integrated into a common housing with the interface device. Alternatively, the secure element maybe provided on a second separate device, in which case the interface device is configured to communicate with the second separate device to utilise the secure element.

By providing an interface device in accordance with the present teaching as an interface element between a main receiver and a display device, the present teaching enables the use of the main receiver to demodulate and tune a received signal but the descrambling and subsequent decoding of that signal is offloaded to the separate security device, the interface device. The control of the received signal and its use is therefore not constrained by the functionality of the main receiver itself. In this way, security features that are specific to a content provider can be separately provided to the main receiver itself, and where for example an operator has several types of main receiver into the field, the use of an interface device 200 per the present teaching as an interface between those plurality of different types of main receivers allows the operator to maintain one type of user interface and more fundamentally one set of encryption protocols that can be used with the provided content irrespective of the type of main receiver that is deployed.

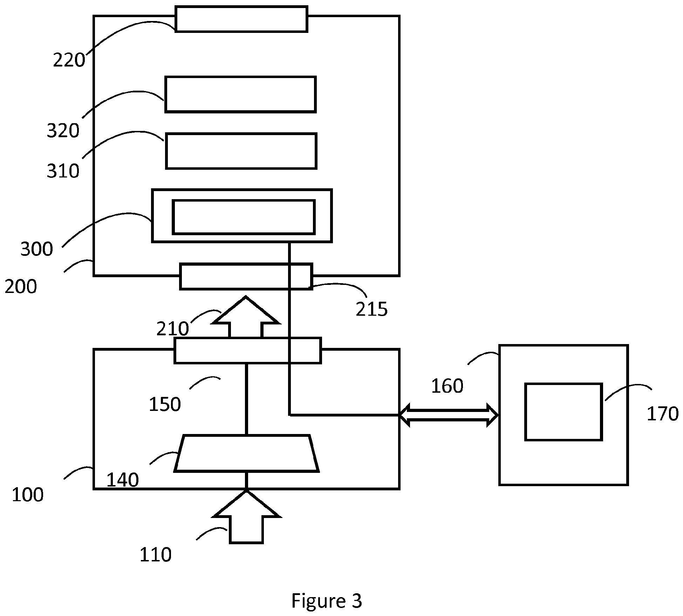

Figure 3 shows an example of the type of functionality that can be provided within an interface device 200 in accordance with the present teaching. As described above, the interface device 200 receives a partially processing signal from the main receiver 100. That signal is fed from the USB input of the interface device 200 into a descrambling module 300 that is desirably provided part of a system on a chip integrated circuit, SoC IC. The output of that descrambling module 300 is a decrypted/descrambled signal that is then fed to a video decoder 310. That video decoder 310 provides the now decoded, descrambled and demodulated signal via a UI block 320 to the HDMI output 220 of the interface device 200. It is then communicated over HDMI protocols into the display device where it may be viewed.

In the example of Figure 3 the descrambling module 300 is configured to read encryption/descrambling keys 170 provided by the secure element 160. The secure element 160 is configured for holding the encryption keys and may be integrated within the interface device 200, or as exemplified with reference to Figure 3, can be provided as a separate device that can communicate with the interface device e- for example through a physical interface to the main receiver itself. In general, the descrambling module 300 is configured to receive an encryption/descrambling key from a secure element to descramble the received signal using the received key. Figure 3 is an example of where they encryption/descrambling keys 170 are provided on a second separate secure element 160 such as a smart card, SIM card, USB dongle, the descrambling module 300 is configured to communicate with the second separate element 160 to receive the encryption keys.

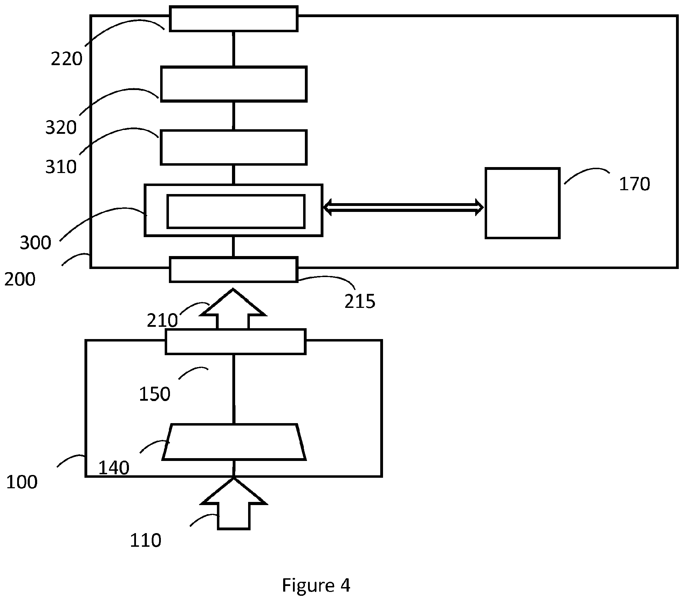

In another example, shown in Figure 4, the descrambling module 300 is configured to read encryption/descrambling keys 170 provided within the overall structure of the interface device 200. In this embodiment, the encryption keys 170 are provided on their own dedicated architecture- such as a distinct die to the SoC IC within which the video processing module 300 is provided. They are however integrated within the form factor or housing of the interface device 200. The descrambling module 300 is configured to retrieve and use the encryption/descrambling key 170 to effect decryption and to pass the descrambled content to the decoding module 310 of the received signal 210. This embodiment differs from that of Figure 3 in that the communication is a direct communication as opposed to an interface through the main receiver.

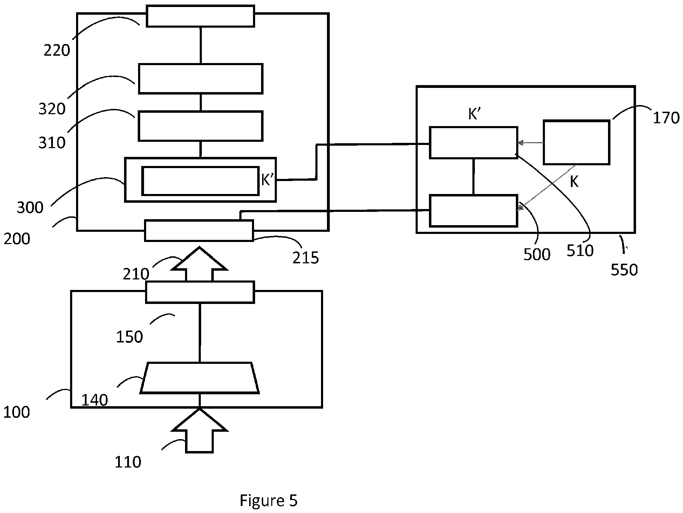

Figure 5 shows a further modification whereby the signal received at the interface device 200 is routed directly to local scrambling 500/ descrambling 510 modules prior to routing to the descrambling module 300

It will be understood that the device per the examples of Figures 3-5 advantageously bypasses the security limitations of standard main receivers. By providing the security protocols and processes that are used to descramble video content on a device that interfaces between the main receiver and the display element, any protected or secured content can be secured using encryption protocols that are specific to the interface device as opposed to the main receiver. Such content can be secured in that it can only be decrypted by protocols that are visible to the interface device 200. The security protocols and processes can also be embedded in secure hardware chips such as those that are provided by Nagravision. The use of secure hardware chips on the interface device 200 that interfaces with the main receiver allows the decryption function of legacy main receiver to be bypassed.

Control of the interface device 200 may be done in one of two ways. In a first aspect a remote control functionality is provided through reuse of a remote control connected to the main receiver. The commands sent to the main receiver are parsed by the main receiver and some commands are directly used by the main receiver. The other commands are sent to the interface device 200 through the USB interface 215.

In a second embodiment, the interface device 200 is provided with an interface- such as an IrDA interface that allows direct communication with a separately provided remote control. In this case, the commands are parsed by the interface device 200 and some commands (channel change for example) are sent back to the main receiver, via for example the USB interface.

It will be appreciated that each of the embodiments illustrated with reference to Figures 3 to 5 enable the receipt of a modulated, scrambled, encoded content transport stream on a main receiver 100 where the content transport stream is demodulated. Of that demodulated content transport stream select portions of the stream can be selected by filtering the content transport stream. That selected content stream, which is selectively encoded, is transported over a USB interface to the interface device 200. The content is received, descrambled, decoded and sent to a display device 130 from the interface device 200.

In the embodiment of Figures 4 and 5, the interface device contains both a SoC IC having the video processing module and a secure element having the necessary security keys to be used by that video processing module. The descrambling is done on the SoC IC (Figure 4) and is desirably done on a dedicated secure element part of the SoC IC. In another configuration (Figure 5) descrambling is done on a secure IC inside the interface device, not necessarily on the same die of the SoC IC that defines the video processing module.

Per the teaching of Figure 5, content is locally re-scrambled on processing components 500, 510 of the secure device 550 and transmitted to the video processing module 300. The content can be locally-descrambled on the video processing module 300. In such an example, keys K, K', for local-encryption are generated by the secure device 550. These keys can be encrypted and transmitted to the video processing module 300.

It will be understood that the secure device 550 can adopt several different forms. For example, the secure device 550can be a smartcard, a SIM card, or a dedicated hardware chip soldered or otherwise embedded in the interface device, such as for example the embodiment of Figure 4.

It will be appreciated that the wording "decrypted" and "descrambled" are used as synonyms in this description. Similar consideration can be made for the wording "encryption key" and "descrambling key".

The words comprises/comprising when used in this specification are to specify the presence of stated features, integers, steps or components but does not preclude the presence or addition of one or more other features, integers, steps, components or groups thereof.

## Claims

1. An interface device configured to interface with a main receiver, the interface device comprising a USB input configured to receive a scrambled audio-video signal from an output of the main receiver, the interface device comprising a descrambling module configured to descramble the received signal, a decoding module to decode the descrambled signal, the descrambling module being configured to receive at least one descrambling key from a secure element and to descramble the received signal using the received key, the interface device being configured to output that descrambled and decoded signal to a display output.

2. The device of claim 1, wherein the display output is a HDMI output, the descrambled and decoded signal being operably transmitted over the HDMI output to a display device.

3. The device of claim 1 wherein the scrambled audio-video signal is a single audio-video signal event.

4. The device of any preceding claim configured to receive power directly from the main receiver over the USB input.

5. The device of any preceding claim wherein the descrambling module is provided on a system on a chip integrated circuit.

6. The device of any preceding claim wherein the secure element is provided on a separate device to the interface device, the descrambling module being configured to communicate with the separate device to utilise the secure element.

7. The device of any one of claims 1 to 5 wherein the secure element is integrated with the interface device.

8. The device of any preceding claim configured to operatively receive command signals from a main receiver coupled to the interface device, the command signals being relayed over the USB interface.

9. The device of any preceding claim comprising a command interface configured to receive commands directly into the command interface and to operatively communicate at least a subset of those commands to a main receiver coupled to the interface device.

10. The device of claim 9 wherein the command interface comprises an IrDA interface configured to receive wireless commands, the device being configured to parse the received commands to select the subset of commands to be communicated to the main receiver.

11. The device of any preceding claim configured to receive scrambled content from the secure element, the descrambling module being configured to descramble that content.

12. The device of any preceding claim wherein the descrambling module is provided on a system on a chip integrated circuit.

13. The device of any preceding claim wherein the descrambling key is operatively received from the secure element over the USB interface, the secure element being coupled to the main receiver.

14. The device of any one of claims 1 to 12 wherein communications between the interface device and the secure element operatively bypass the main receiver.

15. The device of any preceding claim wherein the scrambled audio-video signal operatively received from the output of the main receiver is a tuned signal.
